# EUROPEAN PATENT SPECIFICATION

(11) **EP 4 090 131 B1**
(45) Date of publication and mention of the grant of the patent: **08.07.2026**
(21) Application number: 21208597.1
(22) Date of filing: 16.11.2021
(51) Int. Cl.: H05B 3/26, H01Q 1/32, B29C 45/14

(54) **A DEFROSTING HEATING MODULE FOR AN AUTOMOBILE**
ENTEISUNGSHEIZUNGSMODUL FÜR EIN KRAFTFAHRZEUG
MODULE DE CHAUFFAGE DE DÉGIVRAGE POUR AUTOMOBILE

(30) Priority: 13.05.2021 CN 202110520696; 13.05.2021 CN 202121016926 U
(43) Date of publication of application: 16.11.2022
(73) Proprietor: Yanfeng Plastic Omnium Automotive Exterior Systems Co., Ltd., Shanghai 201805 (CN); OPmobility SE, 69007 Lyon (FR)
(72) Inventor: DAI, Qitao, SHANGHAI, 201805 (CN); QUAN, Feifu, SHANGHAI, 201805 (CN); ZOU, Yuntao, SHANGHAI, 201805 (CN); PAN, Dongqin, SHANGHAI, 201805 (CN); CAI, Yongfeng, SHANGHAI, 201805 (CN)
(74) Representative: LLR

(56) References cited:
- FR-A1- 3 078 501
- FR-A1- 3 080 318
- US-A- 4 957 451
- US-A1- 2010 321 230
- US-A1- 2014 030 932
- US-A1- 2021 037 610

## Description

The invention relates to the field of automobiles, and more particularly, to a defrosting heating module for an automobile.

Existing defrosting heating technologies are mainly used in wave-transparent emblem signs in ACC system and mostly adopt a solution that heats an exterior face. This solution of heating an exterior face is achieved by overmolding a heating film with a product, which causes the problem of needing an additional part to cover a connector on the exterior face of the product. In addition, with the development of automatic driving technologies and the styling requirements of automobile manufacturers, wave-transparent areas in the future will not be limited to the area of an emblem sign in the center of an automobile's body and may involve other areas. For example, currently, some automobile manufacturers have already defined a single side area of an upper trim as a wave-transparent area. For this area, implementing the traditional technology of overmolding a heating film will be constrained by many limitations.

FR 3 080 318 A1 (PLASTIC OMNIUM CIE [FR]) 25 October 2019 (2019-10-25) describes the manufacture of a plastic component intended to be mounted on a motor vehicle body part.

An objective of the invention is to provide a defrosting heating module for an automobile in order to reduce the impact of a severe weather environment on the wave-transparent performance of a millimeter-wave radar in future automatic driving.

In order to solve the above-described technical problem, the invention adopts the following technical solution:
A defrosting heating module for an automobile is provided, which comprises: a base plate; a heating track arranged on the base plate;; and, a connector metal sheet connected with the heating track, the connector metal sheet having an L-shaped structure and formed with a first arm overmolded with the base plate and maintained parallel with the plane in which the base plate is located and the other arm perpendicularly protruding outwards from the base plate and forming a PIN connector; wherein, the base plate is fixed to an interior face of an automobile exterior part, thereby achieving the defrosting by heating of an area that is transparent to a millimeter-wave radar.

Optionally, the base plate is fixed to an interior face of an automobile exterior part by gluing, welding, or overmolding. According to the invention, the base plate is provided with a glue groove that extends along the periphery of the base plate, and the defrosting heating module is fixed to the automobile exterior part by applying a glue in the glue groove.

Optionally, the defrosting heating module also comprises a temperature control module connected with the heating track. Preferably, the temperature control module is connected with the heating track by welding. Otherwise, the heating can also be controlled by a module controlling other functions as well and not integrated with the defrosting heating module. Or else, the heating track may be simply heated for a fixed time each time when the radar detects frost on the radome.

Preferably, the heating track is made of a copper wire.

Preferably, the connector metal sheet is made of a hard copper with a tinned surface.

Preferably, each defrosting heating module comprises a plurality of connector metal sheets.

Preferably, the first arm of the connector metal sheet is provided with a positioning through hole so as to facilitate the overmolding.

Preferably, a top surface of the first arm of the connector metal sheet is provided with a welding pad so as to be welded with the heating track.

The invention proposes, for the first time and in an original way, a defrosting heating module that can be mounted to an interior face of an automobile exterior part at an area that is transparent to a millimeter-wave radar, which solves the problem of additional covering caused by positioning on an exterior face of the automobile exterior part in the prior art and solves the problem that the traditional technology of overmolding a heating film is constrained by many limitations.

The defrosting heating module for an automobile provided according to the invention, mounted on an interior face of an automobile exterior part at an area that is transparent to a millimeter-wave radar, achieves the objective of heating thus defrosting an exterior face of the automobile exterior part by means of heat transfer. Because the defrosting heating module comprises a temperature control module, the heating temperature can be effectively controlled within a certain range, preventing the temperature of the part surface from being too high.

In summary, a defrosting heating module for an area of an automobile exterior part that is transparent to a millimeter-wave radar is provided by the invention, which achieves the objective of defrosting the area by heating in rainy or snowy weather, overcomes the impact of a severe weather environment on the wave-transparent performance of a millimeter-wave radar in future automatic driving, and has good application prospects.
Figure 1 is a top view of a defrosting heating module provided by a preferred embodiment according to the invention;
Figure 2 is a side view of the defrosting heating module shown in Figure 1;
Figure 3 is a side view of a connector metal sheet;
Figure 4 is a top view of a connector metal sheet;
Figure 5 is a schematic view of the defrosting heating module when it is glued to an interior face of an automobile exterior part.

The invention is further described below in connection with specific embodiments. It should be understood that the embodiments below are merely used to describe the invention, rather than limiting the scope of the invention.

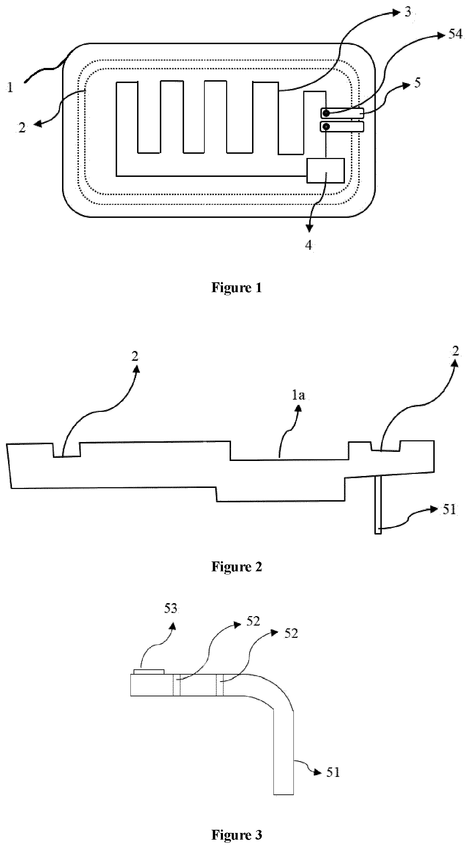

In reference to Figure 1 and Figure 2, a defrosting heating module used for an automobile according to the invention is shown. It comprises: a base plate 1, a glue groove 2, a heating track 3, a temperature control module 4 and a connector metal sheet 5. The defrosting heating module can be mounted to an interior face of an automobile exterior part as a whole, achieving the defrosting of an area that is transparent to a millimeter wave-radar by heating and meeting the requirements for automatic driving in a severe weather environment.

In this embodiment, the base plate 1 substantially presents a plane structure and is formed by injection molding. The glue groove 2 extends along the periphery of the base plate 1 and is used for applying a glue therein. The heating track 3 is positioned within the area defined by the glue groove 2 and achieves the heating-defrosting by self-heating, under the Joule Effect. The temperature control module 4 and the connector metal sheet 5 are both connected with the heating track 3. The temperature control module 4 is used to control the heating temperature to be limited within a certain range, preventing the temperature of the surface of the automobile part from being too high. The connector metal sheet 5 is used for connecting with the wiring harness of the automobile body.

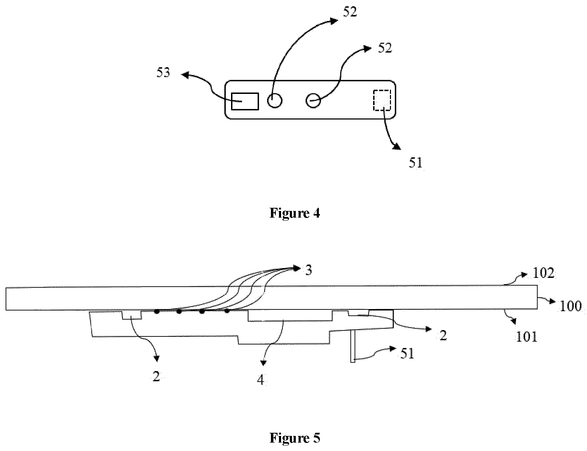

In reference to Figure 3 and Figure 4, the connector metal sheet 5 is configured to have an L shape. The connector metal sheet 5 is formed with a first arm overmolded with the base plate and maintained parallel with the plane in which the base plate 1 is located and a second arm perpendicularly protruding outwards from the base plate 1. The free end of the second arm constitutes a PIN connector 51 that serves as a power plug used for connecting with the wiring harness of the automobile body.

According to this preferred embodiment, as shown in Figure 2, the upper surface of the base plate 1, which is the surface adjacent to the interior face of the automobile part once mounted thereto, is provided with a recess area 1a for accommodating the temperature control module 4, which facilitates the positioning of the temperature control module 4. Similarly, the glue groove 2 is also a groove provided on the upper surface of the base plate 1 so as to facilitate the applying of the glue.

According to this preferred embodiment, the temperature control module 4 is connected with the heating track 3 by welding.

According to this preferred embodiment, the temperature control module 4 uses a SMD resettable fuse. The resettable fuse is integrated onto an FPC soft board. A double-sided tape is applied on the back of the FPC soft board so as to be adhered to the base plate 1.

According to this preferred embodiment, the heating track 3 is preferably made of a copper wire, which can be of one strand or multiple strands. The heating track 3 is positioned in an arrangement compatible with the passage of radar waves through the exterior part of automobile. It should be understood that the arrangement of the heating track 3 is not limited to the serpentine arrangement shown in Figure 1. The connection can be in serial or in parallel and designed according to the heating needs of the part.

According to this preferred embodiment, a polyurethane bi-component glue is used, such as the glue with the Reference No. LJF6021.

According to this preferred embodiment, the connector metal sheet 5 is made of a hard copper with a tinned surface.

According to this preferred embodiment, in reference to Figure 3 and Figure 4, the first arm of the connector metal sheet 5, which is overmolded with the base plate and maintained parallel with the plane in which the base plate 1 is located, is further provided with a positioning through hole 52 so as to achieve a more precise positioning during the overmolding. A top surface of this arm is also provided with a welding pad 53, so as to be welded with the heating track 3. The welding point 54 thus formed is shown in Figure 1.

According to this preferred embodiment, each defrosting heating module comprises two connector metal sheets 5 thus forming two PIN connectors 51 at their free ends. However, it should be understood that each defrosting heating module is not limited to having two connector metal sheets 5. In the case of a complex circuit or presenting other control logics, each defrosting heating module may have four connector metal sheets 5 so that four PIN connectors 51 are formed. A PIN connector 51 serves as a male end that connects with a female end of an automobile body. Conduction is realized by matching the male and female connector ends.

As shown in Figure 5, by applying a glue in the glue groove 2, the base plate 1, together with the heating track 3, the temperature control module 4 and the connector metal sheet 5 provided thereon, can be glued to an interior face 101 of an automobile exterior part 100. When the heating track 3 is powered and heated up, heat is transferred to an exterior face 102 from the interior face 101 of the automobile exterior part, thus achieving the effect of defrosting the surface of the part by heating and eliminating the impact of a severe weather environment on the wave-transparent performance of a millimeter-wave radar in future automatic driving.

Even though the defrosting heating module in the above-described preferred embodiment is adhered to the automobile exterior part by means of a glue, it should be understood that a way other than gluing can be used for this connection, such as welding or overmolding of the base plate and the exterior part of automobile.

The foregoing descriptions are merely preferred embodiments of the invention, and are not intended to limit the scope of the invention. Various changes may be further made to the foregoing embodiments of the invention. Any simple, equivalent change and modification made according to the claims or the content of the specification of this application shall fall within the protection scope of the claims of the application. Any feature that is not described in detail in the application is content of a conventional technology.

## Claims

1. A defrosting heating module for an automobile, comprising:
a base plate (1);
a heating track (3) arranged on the base plate (1); and,
a connector metal sheet (5) connected with the heating track (3), the connector metal sheet having an L-shaped structure with a first arm overmolded with the base plate (1) and maintained parallel with the plane in which the base plate (1) is located and a second arm perpendicularly protruding outwards from the base plate (1) and forming a PIN connector (51);
wherein, the base plate (1) is suitable to be fixed to an interior face (101) of an automobile exterior part (100), thereby achieving the defrosting by heating of an area that is transparent to a millimeter-wave radar,
**characterized in that**, the base plate (1) is provided with a glue groove (2) that extends along the periphery of the base plate (1) for fixing the defrosting heating module to the automobile exterior part (100) by applying a glue in the glue groove (2).

2. The defrosting heating module according to claim 1, **characterized in that**, the base plate (1) is provided with a recess area (1a) for accommodating a temperature control module (4) connected with the heating track (3).

3. The defrosting heating module according to any one of the proceeding claims, **characterized in that**, the temperature control module (4) is connected with the heating track (3) by welding.

4. The defrosting heating module according to any one of the proceeding claims, **characterized in that**, the heating track (3) is made of a copper wire.

5. The defrosting heating module according to any one of the proceeding claims, **characterized in that**, the connector metal sheet (5) is made of a hard copper with a tinned surface.

6. The defrosting heating module according to any one of the proceeding claims, **characterized in that**, each defrosting heating module comprises a plurality of connector metal sheets (5).

7. The defrosting heating module according to any one of the proceeding claims, **characterized in that**, the first arm of the connector metal sheet (5) is provided with a positioning through hole (52) so as to facilitate the overmolding.

8. The defrosting heating module according to any one of the proceeding claims, **characterized in that**, a top surface of the first arm of the connector metal sheet is provided with a welding pad (53) so as to be welded with the heating track (3).

9. The defrosting heating module according to any one of the proceeding claims, **characterized in that**, the heating track (3) circulates on the base plate (1) in an arrangement compatible with the passage of radar waves through the exterior part of automobile (100).

## Patentansprüche

1. Enteisungsheizungsmodul für ein Kraftfahrzeug, umfassend:
eine Grundplatte (1);
eine Heizungsbahn (3), die auf der Grundplatte (1) angeordnet ist; und
ein Verbinderblech (5), das mit der Heizungsbahn (3) verbunden ist, wobei das Verbinderblech eine L-förmige Struktur hat, die einen ersten Arm aufweist, der mit der Grundplatte (1) überformt ist und parallel zu der Ebene gehalten ist, in der sich die Grundplatte (1) befindet, und die einen zweiten Arm aufweist, der von der Grundplatte (1) senkrecht nach außen vorsteht und einen PIN-Verbinder (51) bildet;
wobei die Grundplatte (1) dazu geeignet ist, an einer Innenfläche (101) eines Kraftfahrzeug-Außenteils (100) befestigt zu werden, wodurch das Enteisen durch Erwärmen eines für ein Millimeterwellenradar durchlässigen Bereichs erreicht wird,
**dadurch gekennzeichnet, dass** die Grundplatte (1) mit einer Leimnut (2) versehen ist, die sich entlang des Umfangs der Grundplatte (1) erstreckt, um das Enteisungsheizungsmodul durch Einbringen eines Leims in die Leimnut (2) an dem Kraftfahrzeug-Außenteil (100) zu befestigen.

2. Enteisungsheizungsmodul nach Anspruch 1, **dadurch gekennzeichnet, dass** die Grundplatte (1) mit einem Aussparungsbereich (1a) zum Aufnehmen eines mit der Heizungsbahn (3) verbundenen Temperatursteuerungsmoduls (4) versehen ist.

3. Enteisungsheizungsmodul nach einem der vorangehenden Ansprüche, **dadurch gekennzeichnet, dass** das Temperatursteuerungsmodul (4) durch Schweißen mit der Heizungsbahn (3) verbunden ist.

4. Enteisungsheizungsmodul nach einem der vorangehenden Ansprüche, **dadurch gekennzeichnet, dass** die Heizungsbahn (3) aus einem Kupferdraht hergestellt ist.

5. Enteisungsheizungsmodul nach einem der vorangehenden Ansprüche, **dadurch gekennzeichnet, dass** das Verbinderblech (5) aus einem Hartkupfer mit einer verzinnten Oberfläche hergestellt ist.

6. Enteisungsheizungsmodul nach einem der vorangehenden Ansprüche, **dadurch gekennzeichnet, dass** jedes Enteisungsheizungsmodul mehrere Verbinderbleche (5) umfasst.

7. Enteisungsheizungsmodul nach einem der vorangehenden Ansprüche, **dadurch gekennzeichnet, dass** der erste Arm des Verbinderblechs (5) mit einem Positionierungsdurchgangsloch (52) versehen ist, um das Überformen zu erleichtern.

8. Enteisungsheizungsmodul nach einem der vorangehenden Ansprüche, **dadurch gekennzeichnet, dass** eine Oberseite des ersten Arms des Verbinderblechs mit einem Schweißpad (53) versehen ist, um mit der Heizungsbahn (3) verschweißt zu werden.

9. Enteisungsheizungsmodul nach einem der vorangehenden Ansprüche, **dadurch gekennzeichnet, dass** die Heizungsbahn (3) auf der Grundplatte (1) in einer Anordnung zirkuliert, die mit dem Hindurchtreten von Radarwellen durch den äußeren Teil des Kraftfahrzeugs (100) kompatibel ist.

## Revendications

1. Module de chauffage de dégivrage pour automobile, comprenant :
une plaque de base (1) ;
une piste chauffante (3) disposée sur la plaque de base (1) ; et
une tôle de connexion (5) reliée à la piste chauffante (3), la tôle de connexion présentant une structure en forme de L avec un premier bras surmoulé avec la plaque de base (1) et maintenu parallèle au plan dans lequel se trouve la plaque de base (1), et un second bras faisant saillie perpendiculairement vers l'extérieur à partir de la plaque de base (1) et formant un connecteur à broches (51) ;
dans lequel la plaque de base (1) est apte à être fixée à une face intérieure (101) d'une partie extérieure d'automobile (100), permettant ainsi le dégivrage par chauffage d'une zone transparente aux ondes millimétriques d'un radar,
**caractérisé en ce que** la plaque de base (1) est pourvue d'une rainure de colle (2) s'étendant le long de la périphérie de la plaque de base (1) pour fixer le module de chauffage de dégivrage à la partie extérieure d'automobile (100) en appliquant une colle dans la rainure de colle (2).

2. Module de chauffage de dégivrage selon la revendication 1, **caractérisé en ce que** la plaque de base (1) est pourvue d'une zone en retrait (1a) destinée à loger un module de contrôle de température (4) relié à la piste chauffante (3).

3. Module de chauffage de dégivrage selon l' l'une quelconque des revendications préc édentes , **caractérisé en ce que** le module de contrôle de température (4) est relié à la piste chauffante (3) par soudage.

4. Module de chauffage de dégivrage selon l'une quelconque des revendications précédentes, **caractérisé en ce que** la piste chauffante (3) est constituée d'un fil de cuivre.

5. Module de chauffage de dégivrage selon l'une quelconque des revendications précédentes, **caractérisé en ce que** la tôle de connexion (5) est constituée de cuivre dur présentant une surface étamée.

6. Module de chauffage de dégivrage selon l'une quelconque des revendications précédentes, **caractérisé en ce que** chaque module de chauffage de dégivrage comprend une pluralité de tôles de connexion (5) .

7. Module de chauffage de dégivrage selon l'une quelconque des revendications précédentes, **caractérisé en ce que** le premier bras de la tôle de connexion (5) est muni d'un trou traversant de positionnement (52) de manière à faciliter le surmoulage.

8. Module de chauffage de dégivrage selon l'une quelconque des revendications précédentes, **caractérisé en ce qu'**une surface supérieure du premier bras de la tôle de connexion est pourvue d'un plot de soudage (53) de manière à être soudée à la piste chauffante (3).

9. Module de chauffage de dégivrage selon l'une quelconque des revendications précédentes, **caractérisé en ce que** la piste chauffante (3) circule sur la plaque de base (1) selon un agencement compatible avec le passage d'ondes radar à travers la partie extérieure de l'automobile (100).
